# EUROPEAN PATENT SPECIFICATION

(11) **EP 2 946 921 B1**
(45) Date of publication and mention of the grant of the patent: **20.09.2017**
(21) Application number: 13872251.7
(22) Date of filing: 26.04.2013
(51) Int. Cl.: B32B 15/08, B29C 45/14, B32B 15/085, B32B 15/00

(54) **SHAPED AND COATED METALLIC MATERIAL, COMPOSITE, AND METHOD FOR MANUFACTURING SHAPED AND COATED METALLIC MATERIAL AND COMPOSITE**
GEFORMTES UND BESCHICHTETES METALLISCHES MATERIAL, VERBUNDSTOFF UND VERFAHREN ZUR HERSTELLUNG VON GEFORMTEM UND BESCHICHTETEM METALLISCHEM MATERIAL UND VERBUNDSTOFF
MATÉRIAU MÉTALLIQUE FAÇONNÉ ET REVÊTU, COMPOSITE, ET PROCÉDÉ DE FABRICATION DU MATÉRIAU MÉTALLIQUE FAÇONNÉ ET REVÊTU ET COMPOSITE

(30) Priority: 18.01.2013 JP 2013007216
(43) Date of publication of application: 25.11.2015
(73) Proprietor: Nisshin Steel Co., Ltd., Chiyoda-ku Tokyo 100-8366 (JP)
(72) Inventor: MORIKAWA, Shigeyasu, Tokyo 100-8366 (JP); TSUJIMURA, Takao, Tokyo 100-8366 (JP); FUJII, Takahiro, Tokyo 100-8366 (JP)
(74) Representative: Epping - Hermann - Fischer
(86) International application number: PCT/JP2013/002875
(87) International publication number: WO 2014/111978

(56) References cited:
- EP-A1- 1 327 697
- JP-A- S63 210 134
- JP-A- 2000 212 457
- JP-A- 2000 289 145
- JP-A- 2000 502 964
- JP-A- 2003 094 561
- JP-A- 2004 017 337
- JP-A- 2006 027 018
- JP-B- S4 210 757
- US-A1- 2001 018 490

## Description

### Technical Field

The present invention relates to a coated shaped metal material, a composite including a molded article of a thermoplastic resin composition joined to the coated shaped metal material, and methods for producing the coated shaped metal material and the composite.

### Background Art

So-called "shaped metal materials" are used in various industrial products such as automobiles. The term "shaped metal material" used herein refers to a product made of a metal given some shape by the application of heat, force, or the like. Examples of the shaped metal materials include metal sheets, press-molded products of metal sheets, and metal members shaped by processing methods such as casting, forging, cutting, and powder metallurgy. A composite including a molded article of a resin composition joined to such a shaped metal material is used in various electronic devices such as cellular mobile phones and personal computers, because the composite is lighter than a part made only of a metal and is stronger than a part made only of a resin. Such a composite has heretofore been produced by fitting together the shaped metal material and the molded article of a resin composition. This method for producing the composite by fitting, however, requires a large number of steps of operation and has low productivity. Accordingly, in recent years, the composite has generally been produced by joining the molded article of a resin composition to the shaped metal material by means of insert molding.

For the production of the composite by insert molding, it is important to improve the adhesion between the shaped metal material and the molded article of a resin composition. For example, the roughening treatment of the surface of the shaped metal material prior to insert molding has been proposed as a method for enhancing the adhesion between the shaped metal material and the molded article of a resin composition (see PTLs 1 to 3). The methods disclosed in PTLs 1 to 3 involve roughening the surface of an aluminum alloy to thereby improve the joinability of the aluminum alloy to a molded article of a resin composition.

### Citation List

### Patent Literature

PTL 1 Japanese Patent Application Laid-Open No. 2006-027018
PTL 2 Japanese Patent Application Laid-Open No. 2004-050488
PTL 3 Japanese Patent Application Laid-Open No. 2005-342895

### Summary of Invention

### Technical Problem

The composites described in PTLs 1 to 3 require roughening the surface of the shaped metal material for the use of an anchor effect. Such formation of fine asperities on the surface of the shaped metal material for the purpose of an anchor effect tends to form tiny gaps between the shaped metal material and a molded article of a resin composition. The composites described in PTLs 1 to 3 therefore have low sealing properties between the shaped metal material and a molded article of a resin composition and may cause gas or liquid leakage from the gap between the shaped metal material and a molded article of a resin composition.

An object of the present invention is to provide a composite that is excellent in the joinability and the sealing properties between a coated shaped metal material and a molded article of a thermoplastic resin composition, and a method for producing the composite. Another object of the present invention is to provide a coated shaped metal material for use in the production of the composite, and a method for producing the coated shaped metal material.

### Solution to Problem

The present inventors have found that the above-mentioned problems can be solved by forming an acid-modified polypropylene layer on the surface of a shaped metal material using predetermined acid-modified polypropylene. The present inventors have further conducted studies and thereby completed the present invention.

Specifically, the present invention relates to the coated shaped metal materials and composites and methods as claimed.

### Advantageous Effects of Invention

The present invention can provide a composite that is excellent in the joinability and the sealing properties between a coated shaped metal material and a molded article of a thermoplastic resin composition, and a coated shaped metal material for use in the production thereof.

### Brief Description of Drawings

FIGS. 1A and 1B each schematically illustrate a composite according to the present invention; and
FIG. 2 schematically illustrates the measurement of the amount of helium gas leak.

### Description of Embodiments

### 1. Composite

The composite according to the present invention includes: a coated shaped metal material according to the present invention; and a molded article of a thermoplastic resin composition joined to a surface of the coated shaped metal material according to the present invention. Hereinafter, each component of the composite according to the present invention will be described.

### (1) Coated Shaped Metal Material

The coated shaped metal material according to the present invention includes: a shaped metal material (A); and an acid-modified polypropylene layer (C) disposed on a surface of the shaped metal material. The coated shaped metal material may also have a chemical conversion film (B) disposed between the shaped metal material and the acid-modified polypropylene layer. Hereinafter, each component of the coated shaped metal material will be described.

### A. Shaped Metal Material

The shaped metal material serving as a base material to be coated is not particularly limited by its type. Examples of the shaped metal material include: metal sheets such as cold-rolled steel sheets, zinc-plated steel sheets, Zn-Al alloy-plated steel sheets, Zn-Al-Mg alloy-plated steel sheets, aluminum-plated steel sheets, stainless steel sheets (including austenitic, martensitic, ferritic, and ferrite-martensite duplex-phase stainless steel sheets), aluminum sheets, aluminum alloy sheets, and copper sheets; pressed products of metal sheets; and various metal members shaped by casting or forging (aluminum die-casting, zinc die-casting, etc.) or other methods such as cutting and powder metallurgy. The shaped metal material may be subjected, if necessary, to coating pretreatment known in the art such as degreasing or pickling.

The surface of the shaped metal material has a roughness curve skewness (Rsk) of -1.0 or more, preferably in the range of 0 to -0.4. A surface of the shaped metal material having Rsk less than -1.0 has small recessed portions (small width of recessed portions) which may therefore inhibit the influx of acid-modified polypropylene and thereby reduce gas-sealing properties. Only the surface where the acid-modified polypropylene layer is disposed on the shaped metal material may have the predetermined Rsk, or both surfaces of the shaped metal material may have the predetermined Rsk.

The surface of the shaped metal material has a roughness curve kurtosis (Rku) of less than 5.0, preferably in the range of 2 to 3. A surface of the shaped metal material having Rku of 5.0 or more has projecting portions in a sharp-pointed shape which may cause some sites to be not covered with the acid-modified polypropylene layer. This may reduce the joining power between the coated shaped metal material and the molded article of a thermoplastic resin composition. Only the surface where the acid-modified polypropylene layer is disposed on the shaped metal material may have the predetermined Rku, or both surfaces of the shaped metal material may have the predetermined Rku.

In this context, Rsk and Rku are defined by JIS B 0601-2001. Rsk and Rku are measured using a contact-type surface roughness meter (ET4000AK31; Kosaka Laboratory Ltd.).

Rsk and Rku of the shaped metal material surface are adjusted by non-limiting methods. Examples of the methods for adjusting Rsk and Rku of the shaped metal material surface include the adjustment of roll roughness during temper rolling and blast treatments such as grit blasting, garnet blasting, sand blasting, and shot blasting. When the shaped metal material is a plated material, the surface state of a material before plating can be adjusted to thereby adjust Rsk and Rku of the shaped metal material surface.

### B. Chemical Conversion Film

As mentioned above, the coated shaped metal material may also have a chemical conversion film disposed between the shaped metal material and the acid-modified polypropylene layer. The chemical conversion film is disposed on the surface of the shaped metal material and improves the adhesion between the shaped metal material and the acid-modified polypropylene layer and the corrosion resistance of the coated shaped metal material. The chemical conversion film may be disposed on at least a region (junction surface) to be joined with the molded article of a thermoplastic resin composition, of the surface of the shaped metal material, and is usually disposed on the whole surface of the shaped metal material.

The chemical conversion treatment to form the chemical conversion film is not particularly limited by its type. Examples of the chemical conversion treatment include chromate conversion treatment, chromium-free conversion treatment, and bonderizing treatment. The chemical conversion film formed by the chemical conversion treatment is not particularly limited by its coverage as long as the coverage falls within a range effective for improving the coating adhesion and the corrosion resistance. For example, the coverage of the chromate film can be adjusted such that the coverage attains 5 to 100 mg/m² in terms of the total amount of Cr. The coverage of the chromium-free film can be adjusted such that the coverage of a Ti-Mo composite film falls within a range of 10 to 500 mg/m² or the coverage of a fluoro acid film falls within a range of 3 to 100 mg/m² in terms of the amount of fluorine or in terms of the total amount of metal elements. The coverage of the phosphate film can be adjusted to 0.1 to 5 g/m².

### C. Acid-Modified Polypropylene Layer

The acid-modified polypropylene layer is disposed on the surface of the shaped metal material (or the chemical conversion film). This layer contains 40mass% or more of acid-modified polypropylene. The acid-modified polypropylene layer improves the adhesion between the coated shaped metal material and the molded article of a thermoplastic resin composition. An acid-modified polypropylene layer having an acid-modified polypropylene content less than 40mass% reduces the compatibility of the acid-modified polypropylene layer with the molded article of a thermoplastic resin composition. This may fail to produce the joining power between the coated shaped metal material and the molded article of a thermoplastic resin composition. The acid-modified polypropylene layer is formed by the application of a coating material containing acid-modified polypropylene having a melting point and a crystallinity in predetermined ranges to the surface of the shaped metal material (or the chemical conversion film) followed by solvent (water) evaporation through drying by heating.

The acid-modified polypropylene layer containing 40mass% or more of acid-modified polypropylene has a melt viscosity in the range of 1,000 to 10,000 mPa·s. An acid-modified polypropylene layer containing acid-modified polypropylene having a melt viscosity lower than 1,000 mPa·s flows during joining to the molded article of a thermoplastic resin composition and thereby becomes incompatible with the thermoplastic resin composition. This may fail to produce the joining power between the coated shaped metal material and the molded article of a thermoplastic resin composition. On the other hand, an acid-modified polypropylene layer containing acid-modified polypropylene having a melt viscosity exceeding 10,000 mPa·s is less compatible with the molded article of a thermoplastic resin composition. This may fail to produce the joining power between the coated shaped metal material and the molded article of a thermoplastic resin composition. In this context, the melt viscosity of the acid-modified polypropylene layer is measured using a Brookfield viscometer.

The acid-modified polypropylene layer in the coated shaped metal material according to the present invention preferably contains acid-modified polypropylene having a melting point in the range of 60 to 120°C and a crystallinity in the range of 5 to 20%. The acid-modified polypropylene having a melting point and a crystallinity in the ranges mentioned above can yield an acid-modified polypropylene layer in close contact with asperities on the shaped metal material surface without gaps, because of its high wettability to the surface of the shaped metal material. An acid-modified polypropylene layer containing acid-modified polypropylene having a melting point lower than 60°C or a crystallinity less than 5% is softened at a relatively low temperature and may therefore deteriorate the blocking resistance between coated shaped metal materials during storage or the like. On the other hand, acid-modified polypropylene having a melting point exceeding 120°C or a crystallinity exceeding 20% may reduce the joinability between the coated shaped metal material and the molded article of a thermoplastic resin composition. In this context, the melting point and the crystallinity of the acid-modified polypropylene rarely vary between in a state contained in the coating material (before baking) and in a state contained in the acid-modified polypropylene layer (after baking). Thus, the crystallinity of the acid-modified polypropylene in the acid-modified polypropylene layer can be examined by the X-ray diffraction measurement of the coating material (which will be mentioned later) containing the acid-modified polypropylene according to the Ruland's method.

The acid-modified polypropylene layer has a film thickness of 0.2 µm or larger. An acid-modified polypropylene layer having a film thickness smaller than 0.2 µm cannot uniformly cover the shaped metal material surface. A composite having such an acid-modified polypropylene layer having a film thickness smaller than 0.2 µm therefore may have a reduced joining power between the coated shaped metal material and the molded article of a thermoplastic resin composition, due to tiny gaps formed between the shaped metal material and the molded article of a thermoplastic resin composition. In addition, the presence of such tiny gaps may reduce the sealing properties of the composite. On the other hand, the upper limit of the film thickness of the acid-modified polypropylene layer is not particularly limited and is preferably 3 µm or smaller. A film thickness exceeding 3 µm is not confirmed to significantly improve performance and is also disadvantageous in terms of production and cost.

The composition of the coating material to be applied to the surface of the shaped metal material is not particularly limited as long as the coating material contains the acid-modified polypropylene mentioned above. The coating material to be applied to the surface of the shaped metal material contains, for example, an acid-modified polypropylene-containing aqueous emulsion, an acid-unmodified aqueous resin emulsion, a cross-linking agent, a rust preventive, a lubricant, a stabilizer, and an antifoaming agent. Hereinafter, each component will be described.

The acid-modified polypropylene-containing emulsion can be prepared by the preparation of acid-modified polypropylene which is then fed with water and dispersed therein. Alternatively, any of various surfactants may be added as an emulsifier to the acid-modified polypropylene-containing emulsion. The amount of the acid-modified polypropylene in the coating material can be adjusted by the mixing of the acid-modified polypropylene-containing emulsion with the acid-unmodified aqueous resin emulsion.

Polypropylene is known to have isotactic, atactic, syndiotactic, hemi-isotactic, and stereotactic stereoregularities. The stereoregularity of polypropylene is preferably isotactic from the viewpoint of mechanical characteristics or durability, such as rigidity or impact strength, which is required after molding.

Polypropylene has a weight-average molecular weight preferably in the range of 1,000 to 300,000, more preferably in the range of 5,000 to 100,000. Polypropylene having a weight-average molecular weight smaller than 1,000 may reduce the strength of the acid-modified polypropylene layer. On the other hand, polypropylene having a weight-average molecular weight exceeding 300,000 may complicate operation due to its viscosity increased in a modification step mentioned later.

Polypropylene can be acid-modified by dissolving polypropylene in toluene or xylene and using α,β-unsaturated carboxylic acid and/or acid anhydride of α,β-unsaturated carboxylic acid and/or a compound having one or more double bond(s) per molecule in the presence of a radical generator. Alternatively, polypropylene can be acid-modified by use of an instrument capable of heating to a temperature equal to or higher than the softening temperature or melting point of polypropylene and α,β-unsaturated carboxylic acid and/or acid anhydride of α,β-unsaturated carboxylic acid and/or a compound having one or more double bond(s) per molecule in the presence or absence of a radical generator.

The type of the radical generator include: peroxides such as di-tert-butyl perphthalate, tert-butyl hydroperoxide, dicumyl peroxide, benzoyl peroxide, tert-butyl peroxybenzoate, tert-butyl peroxyethylhexanoate, tert-butyl peroxypivalate, methyl ethyl ketone peroxide, and di-tert-butyl peroxide; and azonitriles such as azobisisobutyronitrile and azobisisopropionitrile. The content of the radical generator is preferably in the range of 0.1 to 50 parts by mass, particularly preferably in the range of 0.5 to 30 parts by mass, with respect to 100 parts by mass of polypropylene.

The type of the α,β-unsaturated carboxylic acid or its acid anhydride includes maleic acid, maleic anhydride, fumaric acid, citraconic acid, citraconic anhydride, mesaconic acid, itaconic acid, itaconic anhydride, aconitic acid, and aconitic anhydride. These compounds may be used alone or may be used in combination. The combined use of two or more of these compounds often improves the physical properties of the acid-modified polypropylene layer.

The compound having one or more double bond(s) per molecule includes: (meth)acrylic acid monomers such as methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylic acid, (di)ethylene glycol di(meth)acrylate, 1,4-butanediol di(meth)acrylate, 1,6-hexanediol di(meth)acrylate, trimethylolpropane tri(meth)acrylate, glycerin di(meth)acrylate, 2-ethylhexyl (meth)acrylate, lauryl (meth)acrylate, stearyl (meth)acrylate, and acrylamide; and styrene monomers such as styrene, α-methylstyrene, p-methylstyrene, and chloromethylstyrene. The compound can be further used in combination with a vinyl monomer such as divinylbenzene, vinyl acetate, or vinyl ester of versatic acid.

These compounds having double bond(s) may be used alone or may be used in combination. The content of the compound having double bond(s) is preferably in the range of 0.1 to 50 parts by mass, particularly preferably in the range of 0.5 to 30 parts by mass, with respect to 100 parts by mass of polypropylene.

The acid value of the acid-modified polypropylene is preferably 1 to 500 mg·KOH/g or lower. The compound polymer having double bond(s) works as a surfactant by itself through neutralization at the time of emulsification (which will be mentioned later) of the acid-modified polypropylene having the predetermined acid value. In the case of carrying out this modification reaction in a solution state in an organic solvent such as toluene and/or xylene or carrying out the reaction in a solvent-free inhomogeneous dispersion system (e.g., aqueous system), it is required to sufficiently perform nitrogen substitution. In this way, the acid-modified polypropylene can be prepared.

The aqueous resin emulsion can be prepared by the mixing the thus-prepared acid-modified polypropylene with water to disperse the acid-modified polypropylene therein. Alternatively, a surfactant may be added to the aqueous resin emulsion. The surfactant is not particularly limited by its type. Examples of the surfactant include nonionic surfactants, anionic surfactants, and cationic surfactants. A polymer-based emulsifier or dispersant may be used instead of these surfactants. These surfactants may be used alone or may be used in combination. The content of the surfactant is preferably in the range of 1 to 100 parts by mass with respect to 100 parts by mass of the modified polypropylene.

The acid-unmodified aqueous resin emulsion can be prepared by the dispersion of a predetermined resin in water. Examples of the resin for use in the acid-unmodified aqueous resin emulsion include acrylic resins, acrylic styrene resins, vinyl acetate, EVA (ethylene-vinyl acetate copolymer resins), fluorine resins, urethane resins, ester resins, olefin resins, and combinations thereof.

Each component contained in the coating material will be described. The cross-linking agent cross-links the acid-modified polypropylene and improves film strength. The cross-linking agent is not particularly limited by its type. Examples of the cross-linking agent include isocyanate-based, epoxy-based, oxazoline-based, melamine-based, and metal salt-containing cross-linking agents. The content of the cross-linking agent in the coating material is preferably in the range of 1 to 30 parts by mass with respect to 100 parts by mass of the acid-modified polypropylene. A cross-linking agent at a content smaller than 1 part by mass may be unable to sufficiently cross-link the acid-modified polypropylene. On the other hand, a cross-linking agent at a content exceeding 30 parts by mass may thicken or solidify the treatment solution.

The rust preventive improves the corrosion resistance of the coated shaped metal material and the composite according to the present invention. The rust preventive is not particularly limited by its type. Preferred examples of the rust preventive include oxides, hydroxides, or fluorides of a metal (valve metal) selected from the group consisting of Ti, Zr, V, Mo, and W, and combinations thereof. Any of these metal compounds dispersed in the acid-modified polypropylene layer can further improve the corrosion resistance of the coated shaped metal material. Particularly, the fluorides of these metals can also be expected to suppress the corrosion of a film defect area by virtue of their self-repairing effects.

The acid-modified polypropylene layer may further contain a soluble or poorly soluble metal phosphate or complex phosphate. The soluble metal phosphate or complex phosphate thereof further improves the corrosion resistance of the shaped metal material by complementing the self-repairing effects of the metal fluoride(s) mentioned above. The poorly soluble metal phosphate or complex phosphate thereof dispersed in the acid-modified polypropylene layer improves film strength. The soluble or poorly soluble metal phosphate or complex phosphate is, for example, a salt of Al, Ti, Zr, Hf, Zn, or the like.

The lubricant can suppress the occurrence of galling in the surface of the coated shaped metal material according to the present invention. The lubricant is not particularly limited by its type. Examples of the lubricant include: organic waxes such as fluorine-based, polyethylene-based, styrene-based, and polypropylene-based waxes; and inorganic lubricants such as molybdenum disulfide and talc. The content of the lubricant in the coating material is preferably in the range of 1 to 20 parts by mass with respect to 100 parts by mass of the acid-modified polypropylene. A lubricant at a content smaller than 1 part by mass may be unable to sufficiently suppress the occurrence of galling. On the other hand, a lubricant at a content exceeding 20 parts by mass is not confirmed to have significant improvement in its effect of suppressing the occurrence of galling and may deteriorate handleability due to its high lubricity.

The antifoaming agent prevents the formation of foam during the preparation of the coating material. The antifoaming agent is not particularly limited by its type. A known silicone-based antifoaming agent, for example, can be added in an appropriate amount to the coating material according to the need.

### (2) Molded Article of Thermoplastic Resin Composition

The molded article of a thermoplastic resin composition is joined to the surface of the coated shaped metal material (more accurately, the surface of the acid-modified polypropylene layer). The thermoplastic resin composition constituting the molded article is an amorphous resin composition (e.g., a PVC (polyvinyl chloride) resin composition and a PMMA (methacrylic acid) resin composition) or a crystalline resin composition (e.g., a PE (polyethylene) resin composition, a PP (polypropylene) resin composition, a POM (polyacetal) resin composition), or a combination thereof. The shape of the molded article of a thermoplastic resin composition is not particularly limited and can be appropriately selected according to use.

The thermoplastic resin composition has a mold shrinkage factor of preferably 1.1% or less. The mold shrinkage factor of the thermoplastic resin composition can be adjusted by a method known in the art. The mold shrinkage factor can be adjusted, for example, by (A) adding an inorganic filler or the like to a thermoplastic resin composition containing a thermoplastic elastomer. Alternatively, the mold shrinkage factor can also be adjusted by (B) changing the mixing ratio between a crystalline resin and an amorphous resin.

### A. Adjustment of Mold Shrinkage Factor by Addition of Inorganic Filler

The thermoplastic elastomer improves the shock resistance of the molded article of the thermoplastic resin composition. The thermoplastic elastomer is not particularly limited by its type. Examples of the thermoplastic elastomer include polyolefin resins, polystyrene resins, and combinations thereof. The inorganic filler reduces the mold shrinkage factor of the molded article of the thermoplastic resin composition and improves rigidity. The inorganic filler is not particularly limited by its type, and a known substance can be used. Examples of the inorganic filler include: fibrous fillers such as glass fibers, carbon fibers, and aramid resins; powder fillers such as carbon black, calcium carbonate, calcium silicate, magnesium carbonate, silica, talc, glass, clay, lignin, mica, quartz powders, and glass spheres; and pulverized carbon fibers or aramid fibers. These inorganic fillers may be used alone or may be used in combination. The content of the filler in the thermoplastic resin composition is preferably in the range of 5 to 60mass%, more preferably in the range of 10 to 40mass%.

### B. Adjustment of Mold Shrinkage Factor by Mixing of Crystalline Resin and Amorphous Resin

The mold shrinkage factor of the thermoplastic resin composition may also be adjusted by the mixing of a crystalline resin and an amorphous resin. In general, the crystalline resin has a larger mold shrinkage factor than that of the amorphous resin. Accordingly, the mixing ratio of the amorphous resin to the crystalline resin can be increased to thereby decrease the mold shrinkage factor of the thermoplastic resin composition.

### 2. Method for Producing Composite

A method for producing the composite according to the present invention includes: (1) providing the coated shaped metal material according to the present invention; and (2) contacting a heated thermoplastic resin composition with a surface of the coated shaped metal material to join a molded article of the thermoplastic resin composition to the surface of the coated shaped metal material. Hereinafter, each step will be described.

### (1) Step 1

In this step, the coated shaped metal material according to the present invention is provided. As mentioned above, the coated shaped metal material according to the present invention is formed by the application of a coating material containing predetermined acid-modified polypropylene to the surface of a shaped metal material followed by drying to form an acid-modified polypropylene layer thereon. A chemical conversion film may be formed before the formation of the acid-modified polypropylene layer.

In the case of forming the chemical conversion film on the surface of the shaped metal material, the chemical conversion film can be formed by the application of a chemical conversion treatment solution to the surface of the shaped metal material followed by drying. The method for applying the chemical conversion treatment solution is not particularly limited and can be appropriately selected from known methods. Examples of such application methods include roll coating, curtain flow, spin coating, spraying, and dip-drawing methods. The conditions for the drying of the chemical conversion treatment solution may be appropriately set according to the composition of the chemical conversion treatment solution, etc. For example, the shaped metal material having the chemical conversion treatment solution applied thereon can be placed in a drying oven without being washed with water, and heated such that a peak plate temperature falls within a range of 80 to 250°C to form a uniform chemical conversion film on the surface of the shaped metal material.

The acid-modified polypropylene layer is formed on the surface of the shaped metal material (or the chemical conversion film) by the application thereto of a coating material containing the above-mentioned acid-modified polypropylene followed by drying. The method for applying the coating material is not particularly limited and can be appropriately selected from known methods. Examples of such application methods include roll coating, curtain flow, spin coating, spraying, and dip-drawing methods. The drying method is not particularly limited and can involve volatilizing a solvent (water) in the coating. For example, the shaped metal material having the acid-modified polypropylene applied thereon is dried without being washed with water. The drying temperature is not particularly limited and is preferably equal to or higher than the melting point of the acid-modified polypropylene with a peak plate temperature being 250°C or lower during the drying. At a peak plate temperature of 250°C or lower, the acid-modified polypropylene layer can be formed in close contact with the surface of the shaped metal material (or the chemical conversion film) without gaps. At the drying temperature equal to or higher than the melting point of the acid-modified polypropylene, emulsion particles of the acid-modified polypropylene can be molten to easily yield film-shaped acid-modified polypropylene. The drying time is not particularly limited either. At a low drying temperature, a long drying time can form an acid-modified polypropylene layer in close contact with the surface of the shaped metal material (or the chemical conversion film) without gaps. On the other hand, at a high drying temperature, a short drying time through the use of a drying oven can form an acid-modified polypropylene layer in close contact with the surface of the shaped metal material (or the chemical conversion film) without gaps while suppressing the decomposition of the acid-modified polypropylene.

### (2) Step 2

In this step, a heated thermoplastic resin composition is contacted with a surface of the coated shaped metal material to join a molded article of the thermoplastic resin composition to the surface of the coated shaped metal material. The coated shaped metal material may could have been processed into a desired shape by pressing or the like.

For example, after insertion of the coated shaped metal material according to the present invention provided in step 1 into an injection molding die, a thermoplastic resin composition in a molten state can be injected at a high pressure into the injection molding die. In this respect, the injection molding die is preferably provided with a degassing port that allows the thermoplastic resin composition to flow smoothly. The thermoplastic resin composition in a molten state is uniformly blended with an organic resin layer formed on the surface of the shaped metal material. The temperature of this injection molding die is preferably around the melting point of the thermoplastic resin composition. The composite obtained by injection molding may be subjected to annealing treatment after the molding to cancel internal strain ascribable to mold shrinkage.

Alternatively, the coated shaped metal material according to the present invention provided in step 1 and a thermoplastic resin composition may be loaded in a thermocompression press where heat and pressure can then be applied to the coated shaped metal material and the thermoplastic resin composition. In this case, for example, a thermoplastic resin composition reinforced by glass fiber, carbon fiber, or the like (so-called stampable sheet) may be used as the thermoplastic resin composition. This application of heat and pressure may be carried out to the whole or a portion of the coated shaped metal material and the thermoplastic resin composition. It is required to apply heat and pressure at least to the junction surface between the coated shaped metal material and the thermoplastic resin composition. A portion of the acid-modified polypropylene layer and a portion of the thermoplastic resin composition thus heat- and pressure-applied are molten and uniformly blended with each other. The methods for applying heat and pressure to the coated shaped metal material and the thermoplastic resin composition are not particularly limited. Examples of the heat application method include heating using a heater, heating by electromagnetic induction, and ultrasonic heating. Examples of the pressure application method include the manual application of pressure and the application of pressure using a vice or the like.

The molded article of the thermoplastic resin composition can be joined to the surface of the coated shaped metal material by the procedures mentioned above to produce the composite of the present invention.

For the production of the coated shaped metal material according to the present invention, as described above, a coating material containing acid-modified polypropylene having a melting point and a crystallinity in predetermined ranges is applied to a surface of the shaped metal material and dried so that the coating material is in close contact with the surface of the shaped metal material without gaps to form an acid-modified polypropylene layer. This acid-modified polypropylene layer can be uniformly blended with a thermoplastic resin composition and therefore joined firmly to a molded article of the thermoplastic resin composition without gaps. For this reason, the composite according to the present invention includes the molded article of the thermoplastic resin composition joined to the shaped metal material without gaps. Thus, the composite including the coated shaped metal material according to the present invention is excellent in gas- and liquid-sealing properties by virtue of the joining between the shaped metal material and the molded article of the thermoplastic resin composition without gaps.

Hereinafter, the present invention will be described in detail with reference to Examples using a metal sheet as a shaped metal material. However, the present invention is not intended to be limited by these Examples.

### Examples

### [Example 1]

In Example 1, each coated shaped metal material was examined for its blocking resistance.

### 1. Preparation of Coated Shaped Metal Material

### (1) Base Material to Be Coated

### A. Base Material 1 to Be Coated

The surface of SUS430 having a sheet thickness of 0.8 mm was No. 4-finished to provide base material 1 to be coated. The surface of base material 1 to be coated had Rsk of -0.4 and Rku of 4.4.

### B. Base Material 2 to Be Coated

The surface of base material 1 to be coated was treated by sand blasting to provide base material 2 to be coated. The surface of base material 2 to be coated had Rsk of -0.3 and Rku of 5.2.

### C. Base Material 3 to Be Coated

The surface of base material 1 to be coated was treated by shot blasting to provide base material 3 to be coated. The surface of base material 3 to be coated had Rsk of -1.3 and Rku of 4.5.

### D. Base Material 4 to Be Coated

A hot-dip Zn-6mass% Al-3mass% Mg alloy-plated steel sheet having a plating coverage of 45 g/m² on one side of a cold-rolled steel sheet (SPCC) having a sheet thickness of 0.8 mm was provided as base material 4 to be coated. The surface of base material 4 to be coated had Rsk of -0.3 and Rku of 2.3.

### E. Base Material 5 to Be Coated

A hot-dip Al-9mass% Si alloy-plated steel sheet having a plating coverage of 45 g/m² on one side of a cold-rolled steel sheet (SPCC) having a sheet thickness of 0.8 mm was provided as base material 5 to be coated. The surface of base material 5 to be coated had Rsk of -0.9 and Rku of 4.1.

### F. Base Material 6 to Be Coated

An alloyed hot-dip Zn-plated steel sheet having a plating coverage of 45 g/m² on one side of a cold-rolled steel sheet (SPCC) having a sheet thickness of 0.8 mm was provided as base material 6 to be coated. The surface of base material 6 to be coated had Rsk of 0.3 and Rku of 2.7.

### (2) Preparation of Coating Material

Each acid-modified polypropylene resin (A), a polyurethane resin (B), a polyethylene wax (C), and an epoxy-based cross-linking agent (D) were added to water such that the ratio of acid-modified polypropylene to the total resin mass attained the ratio shown in Table 1 to prepare a coating material having 20% nonvolatile components. Each coating material was supplemented with 0.5mass% of ammonium molybdate (Kishida Chemical Co., Ltd.) as a rust preventive, 0.5mass% of ammonium zirconium carbonate (ZIRCOSOL; Daiichi Kigenso Kagaku Kogyo Co., Ltd.), and 0.05mass% of a silicone-based antifoaming agent (KM-73; Shin-Etsu Chemical Co., Ltd.).

### A. Acid-Modified Polypropylene Resin

Acid (maleic acid)-modified polypropylene resins having an acid value of 5 mg·KOH/g and a crystallinity of 3% and 50% were obtained from a resin manufacturer. The acid-modified polypropylene resins having crystallinities of 3% and 50% were mixed at their respective predetermined ratios to prepare acid-modified polypropylene resins having a crystallinity of 3%, 5%, 15%, 20%, 30%, and 50%.

### B. Polyurethane Resin

A polyurethane resin emulsion (HUX-232; ADEKA Corp.) was used as a polyurethane resin for adjusting the ratio of acid-modified polypropylene to the total resin mass.

### C. Polyethylene wax

A polyethylene wax (E-9015; TOHO Chemical Industry Co., Ltd.) was added at a ratio of 5mass% to the total resin mass.

### D. Epoxy-based Cross-Linking Agent

An epoxy resin (EM-0461N; ADEKA Corp.) was added at a ratio of 5mass% to the total resin mass.

### (3) Formation of Coating

Each base material to be coated was dipped for 1 minute in an aqueous alkali solution for degreasing (SD-270; Nippon Paint Co., Ltd., pH = 12) having a solution temperature of 40°C to degrease the surface. Subsequently, each coating material was applied to the degreased surface of the base material to be coated using a roll coater and dried with a hot-air dryer at a peak metal temperature of 150°C to form an acid-modified polypropylene layer having the film thickness shown in Table 1.

**[Table 1]**

| Coated shaped metal material No. | Acid-modified polypropylene layer | | | | | |
|---|---|---|---|---|---|---|
| | Base material to be coated | Acid-modified polypropylene (mass%) | Melt viscosity (mPa·s) | Melting point (°C) | Crystallinity (%) | Film thickness (µm) |
| 1 | 1 | 40 | 1,000 | 80 | 15 | 0.5 |
| 2 | 4 | 40 | 2,500 | 80 | 5 | 0.8 |
| 3 | 5 | 40 | 5,000 | 80 | 15 | 1.1 |
| 4 | 6 | 40 | 8,000 | 80 | 15 | 0.2 |
| 5 | 1 | 60 | 2,500 | 60 | 10 | 1.5 |
| 6 | 1 | 60 | 5,000 | 60 | 15 | 0.5 |
| 7 | 4 | 60 | 5,000 | 120 | 20 | 1.5 |
| 8 | 4 | 80 | 10,000 | 100 | 18 | 2.0 |
| 9 | 4 | 80 | 2,500 | 100 | 18 | 3.0 |
| 10 | 4 | 100 | 2,500 | 100 | 18 | 12.5 |
| 11 | 2 | 80 | 2,500 | 100 | 18 | 1.5 |
| 12 | 3 | 100 | 2,500 | 100 | 18 | 2.0 |
| 13 | 1 | 80 | 2,500 | 50 | 15 | 1.5 |
| 14 | 4 | 80 | 2,500 | 170 | 20 | 1.5 |
| 15 | 5 | 80 | 2,500 | 60 | 3 | 2.0 |
| 16 | 6 | 80 | 2,500 | 120 | 25 | 2.0 |
| 17 | 4 | 80 | 2,500 | 100 | 18 | 0.1 |
| 18 | 5 | 30 | 2,500 | 100 | 18 | 2.0 |
| 19 | 5 | 80 | 500 | 100 | 18 | 2.0 |
| 20 | 5 | 80 | 12,000 | 100 | 18 | 2.0 |

### 2. Evaluation

### (1) Evaluation of Blocking Resistance

Two test pieces (50 mm × 50 mm) were cut out of each coated shaped metal material and stacked (bonded) to each other by the application of a pressure of 0.1 MPa with their acid-modified polypropylene layers placed face to face. The stacked pieces of the coated shaped metal material were left at 45°C for 24 hours in an atmosphere of 80% relative humidity. The pieces of the coated shaped metal material thus left for 24 hours were unstacked and evaluated for the sticking between the acid-modified polypropylene layers. The coated shaped metal material was evaluated as "Poor" when the sticking was confirmed between the acid-modified polypropylene layers, and as "Good" when no sticking was confirmed between the acid-modified polypropylene layers. The coated shaped metal materials used and the results of evaluating blocking resistance are shown in Table 2.

**[Table 2]**

| Coated shaped metal material No. | Blocking resistance |
|---|---|
| 1 | Good |
| 2 | Good |
| 3 | Good |
| 4 | Good |
| 5 | Good |
| 6 | Good |
| 7 | Good |
| 8 | Good |
| 9 | Good |
| 10 | Good |
| 11 | Good |
| 12 | Good |
| 13 | Poor |
| 14 | Good |
| 15 | Poor |
| 16 | Good |
| 17 | Good |
| 18 | Good |
| 19 | Good |
| 20 | Good |

### (2) Results

The coated shaped metal materials of Nos. 1 to 12, 14, and 16 to 20 were excellent in the blocking resistance between coated shaped metal materials, because their acid-modified polypropylene layers had a melting point and a crystallinity in the predetermined ranges. By contrast, the coated shaped metal material of No. 13 and the coated shaped metal material of No. 15 were inferior in the blocking resistance between coated shaped metal materials, because their acid-modified polypropylene layers had a melting point lower than 60°C and a crystallinity less than 5%, respectively.

### [Example 2]

In Example 2, each composite was evaluated for its joining power and gas-sealing properties.

### 1. Preparation of Composite

### (1) Coated Shaped Metal Material

The same coated shaped metal materials of Nos. 1 to 20 as those in Example 1 were provided.

### (2) Thermoplastic Resin Composition

NIPOLON Hard 1000 (melting point: 134°C; Tosoh Corp.) was used as a polyethylene (PE) resin composition. PRIME POLYPRO R-350G (melting point: 150°C; Prime Polymer Co., Ltd.) was used as a polypropylene (PP) resin composition. KANEVINYL S-400 (melting point: 159°C; Kaneka Corp.) was used as a polyvinyl chloride (PVC) resin composition. PARAPET GF (melting point: 110°C; Kuraray Co., Ltd.) was used as a PMMA (methacrylic acid) resin composition. DURACON TF-30 (melting point: 165°C; Polyplastics Co., Ltd.) was used as a POM (polyacetal) resin composition.

### (3) Joining between Coated Shaped Metal Material and Thermoplastic Resin Composition

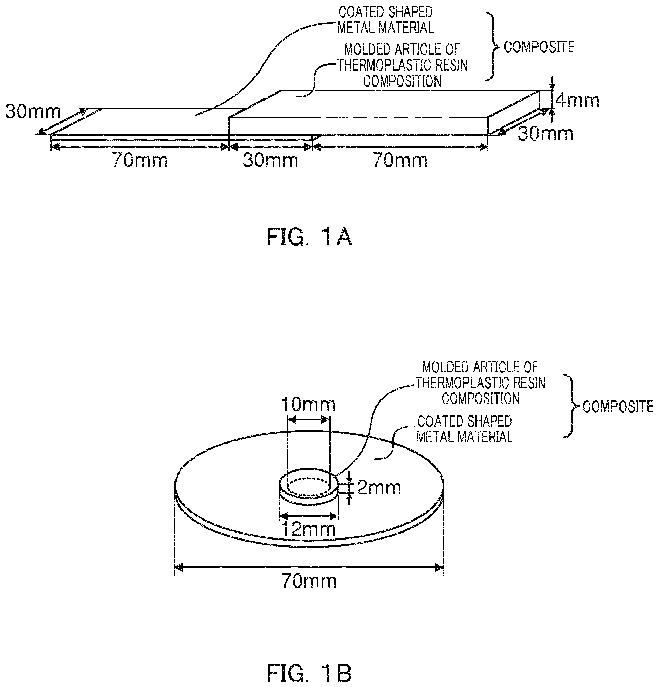

FIGS. 1A and 1B each schematically illustrate a composite. FIG. 1A schematically illustrates a composite for the measurement of joining power. FIG. 1B schematically illustrates a composite for the measurement of gas-sealing properties.

### A. Joining between Coated Shaped Metal Material for Measurement of Joining Power and Thermoplastic Resin Composition

Each coated shaped metal material was inserted into an injection molding die, and each thermoplastic resin composition in a molten state was injected into the cavity of the injection molding die. As illustrated in FIG. 1A, the shape of the cavity is 30 mm wide x 100 mm long x 4 mm thick. The thermoplastic resin composition is in contact with the coated shaped metal material in a region of 30 mm wide x 30 mm long on one side. The thermoplastic resin composition thus injected into the cavity was solidified by cooling to obtain a composite of the coated shaped metal material for the measurement of joining power and the molded article of the thermoplastic resin composition. The combinations of the coated shaped metal materials and the thermoplastic resin compositions are shown in Table 3.

### B. Joining between Coated Shaped Metal Material for Measurement of Gas-Sealing Properties and Molded Article of Thermoplastic Resin Composition

As illustrated in FIG. 1B, each coated shaped metal material having a diameter of 70 mm with a hole of φ10 mm formed at the center was inserted into an injection molding die. Each thermoplastic resin composition in a molten state was injected into the injection molding die. The shape of the cavity of the injection molding die is φ12 mm x 2 mm thick. The thermoplastic resin composition thus injected into the injection molding die was solidified by cooling to obtain a composite of the coated shaped metal material for the measurement of gas-sealing properties and the molded article of the thermoplastic resin composition. The coated shaped metal material is contacted with the molded article of the thermoplastic resin composition at a width of 1 mm around the hole of φ10 mm disposed at the center of the coated shaped metal material. The combinations of the coated shaped metal materials and the thermoplastic resin compositions in the composites provided for the measurement of gas-sealing properties were the same as the combinations of the coated shaped metal materials and the thermoplastic resin compositions in the composites provided for the measurement of joining power (see Table 3).

### 2. Evaluation

### (1) Measurement of Joining Power

The coated shaped metal material and the molded article of the thermoplastic resin composition in each prepared composite were both pulled oppositely at a rate of 100 mm/min in the coplanar direction, and the strength at break (peel strength) was measured. The composite was evaluated as "Poor" when the peel strength was less than 1.0 kN, as "Fair" when the peel strength was 1.0 kN or more and less than 1.5 kN, as "Good" when the peel strength was 1.5 kN or more and less than 2.0 kN, and as "Excellent" when the peel strength was 2.0 kN or more. The composite having joining power of "Fair", "Good", or "Excellent" was regarded as acceptable.

### (2) Measurement of Gas-Sealing Properties

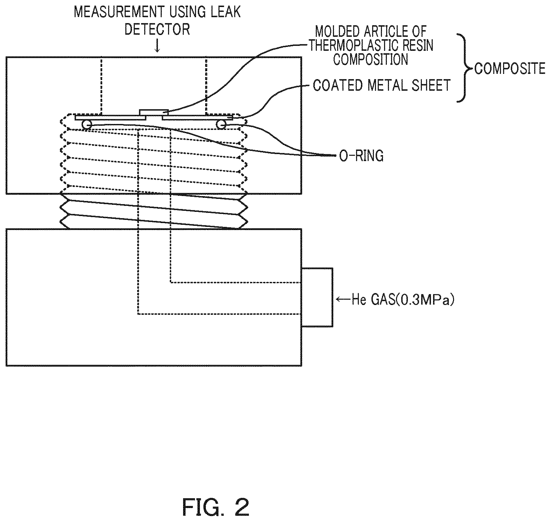

FIG. 2 schematically illustrates the measurement of the amount of helium gas leak. As illustrated in FIG. 2, each prepared composite was placed in a closed vessel made of SUS. Helium gas was injected thereinto at a pressure of 0.3 MPa for 3 minutes. The amount of helium leak at the junction was measured by the Sniffer Method. The composite was evaluated as "Poor" when the amount of helium gas leak was 10 Pa·m³/s or larger, as "Fair" when the amount of helium gas leak was 10⁻³ Pa·m³/s or larger and smaller than 10 Pa·m³/s, as "Good" when the amount of helium gas leak was 10⁻⁵ Pa·m³/s or larger and smaller than 10⁻³ Pa·m³/s, and as "Excellent" when the amount of helium gas leak was smaller than 10⁻⁵ Pa·m³/s. The composite having gas-sealing properties of "Fair", "Good", or "Excellent" were regarded as acceptable.

**[Table 3]**

| Segment | Composite No. | Coated shaped metal material No. | Thermoplastic resin composition | | | Joining power (kN) | Gas-sealing properties (Pa·m³/s) |
|---|---|---|---|---|---|---|---|
| | | | Resin composition | Glass fiber (mass%) | Mold shrinkage factor (%) | | |
| Example 1 | 1 | 1 | PE | 5 | 1.1 | 1.8 (Good) | 10⁻⁵ (Good) |
| Example 2 | 2 | 2 | PP | 30 | 0.2 | 2.0 (Excellent) | 10⁻⁶ (Excellent) |
| Example 3 | 3 | 3 | PVC | - | 0.1 | 1.9 (Good) | 10⁻⁵ (Good) |
| Example 4 | 4 | 4 | PMMA | - | 0.2 | 2.0 (Excellent) | 10⁻⁶ (Excellent) |
| Example 5 | 5 | 5 | PE | 5 | 1.1 | 1.9 (Good) | 10⁻⁶ (Excellent) |
| Example 6 | 6 | 6 | PP | 30 | 0.2 | 1.8 (Good) | 10⁻⁶ (Excellent) |
| Example 7 | 7 | 7 | PP | 30 | 0.2 | 2.3 (Excellent) | 10⁻⁶ (Excellent) |
| Example 8 | 8 | 8 | PVC | - | 0.1 | 2.5 (Excellent) | 10⁻⁶ (Excellent) |
| Example 9 | 9 | 9 | PP | 30 | 0.2 | 2.8 (Excellent) | 10⁻⁶ (Excellent) |
| Example 10 | 10 | 10 | PE | 5 | 1.1 | 2.7 (Excellent) | 10⁻⁶ (Excellent) |
| Example 11 | 11 | 5 | PP | 30 | 0.2 | 1.9 (Good) | 10⁻⁶ (Excellent) |
| Example 12 | 12 | 8 | POM | 30 | 1.5 | 1.5 (Good) | 10⁻² (Fair) |
| Example 13 | 13 | 11 | PP | 30 | 0.2 | 1.5 (Good) | 10⁻³ (Good) |
| Example 14 | 14 | 12 | PVC | - | 0.1 | 1.4 (Fair) | 10⁻³ (Good) |
| Example 15 | 15 | 13 | PP | 30 | 0.2 | 1.8 (Good) | 10⁻⁵ (Good) |
| Example 16 | 16 | 14 | PP | 30 | 0.2 | 1.4 (Fair) | 10⁻³ (Good) |
| Example 17 | 17 | 15 | PP | 30 | 0.2 | 1.9 (Good) | 10⁻⁵ (Good) |
| Example 18 | 18 | 16 | PP | 30 | 0.2 | 1.6 (Good) | 10⁻³ (Good) |
| Comparative Example 1 | 19 | 17 | PP | 30 | 0.2 | 0.6 (Poor) | 10 (Poor) |
| Comparative Example 2 | 20 | 18 | PP | 30 | 0.2 | 0.9 (Poor) | 10⁻¹ (Fair) |
| Comparative Example 3 | 21 | 19 | PP | 30 | 0.2 | 0.8 (Poor) | 10⁻² (Fair) |
| Comparative Example 4 | 22 | 20 | PE | 5 | 1.1 | 0.6 (Poor) | 10⁻¹ (Fair) |

### (3) Results

The composites of Nos. 1 to 18 were excellent in the joining power between the coated shaped metal material and the resin composition and the gas-sealing properties, because their acid-modified polypropylene layers contained acid-modified polypropylene in an amount of 40mass% or more, and had a melt viscosity in the range of 1,000 to 10,000 mPa·s and a film thickness of 0.2 µm or larger.

By contrast, the composite of No. 19 was inferior in the joining power between the coated shaped metal material and the molded article of the thermoplastic resin composition and the gas-sealing properties, because its acid-modified polypropylene layer had a film thickness smaller than 0.2 µm The composite of No. 20 was inferior in the joining power between the coated shaped metal material and the molded article of the thermoplastic resin composition, because its acid-modified polypropylene layer contained acid-modified polypropylene in an amount smaller than 40mass%. The composites of Nos. 21 and 22 were inferior in the joining power between the coated shaped metal material and the molded article of the thermoplastic resin composition, because their acid-modified polypropylene layers had a melt viscosity that fell without the predetermined range.

### Industrial Applicability

The composite including the coated shaped metal material of the present invention is excellent in gas- and liquid-sealing properties. The composite can therefore shut out humidity, corrosive gas, or the like and is useful for, for example, inverter cases or ECU (engine control unit) cases for automobiles, and precision electronic component cases for electric products.

## Claims

1. A coated shaped metal material comprising:
a shaped metal material; and
an acid-modified polypropylene layer disposed on the shaped metal material, the acid-modified polypropylene layer comprising 40mass% or more of acid-modified polypropylene, wherein
the acid-modified polypropylene has a melt viscosity of 1,000 to 10,000 mPa·s,
the acid-modified polypropylene layer has a film thickness of 0.2 µm or larger,
a surface of the shaped metal material on which the acid-modified polypropylene layer is disposed has a roughness curve skewness (Rsk) of -1.0 or more, and
the surface of the shaped metal material on which the acid-modified polypropylene layer is disposed has a roughness curve kurtosis (Rku) less than 5.0.

2. A composite comprising:
the coated shaped metal material according to claim 1; and
a molded article of a thermoplastic resin composition joined to a surface of the coated shaped metal material.

3. A method for producing a coated shaped metal material, comprising:
providing a shaped metal material; and
forming an acid-modified polypropylene layer comprising 40 mass% or more of acid-modified polypropylene and having a film thickness of 0.2 µm or larger by applying a coating material comprising the acid-modified polypropylene to a surface of the shaped metal material and drying the coating material, wherein
the acid-modified polypropylene has a melt viscosity in the range of 1,000 to 10,000 mPa·s,
the surface of the shaped metal material on which the acid-modified polypropylene layer is to be formed has a roughness curve skewness (Rsk) of -1.0 or more, and
the surface of the shaped metal material on which the acid-modified polypropylene layer is to be formed has a roughness curve kurtosis (Rku) less than 5.0.

4. A method for producing a composite comprising a molded article of a thermoplastic resin composition joined to a shaped metal material, the method comprising:
providing the coated shaped metal material according to claim 1; and
contacting a heated thermoplastic resin composition with a surface of the coated shaped metal material to join a molded article of the thermoplastic resin composition to the surface of the coated shaped metal material.

## Patentansprüche

1. Beschichteter Metallformwerkstoff, aufweisend:
einen Metallformwerkstoff; und
eine säuremodifizierte Polypropylenschicht, die auf dem Metallformwerkstoff angeordnet ist, wobei die säuremodifizierte Polypropylenschicht 40 Massenprozent oder mehr an säuremodifizierten Polypropylen aufweist, wobei
das säuremodifizierte Polypropylen eine Schmelzviskosität von 1.000 bis 10.000 mPa•s hat,
die säuremodifizierte Polypropylenschicht eine Schichtstärke von 0,2 µm oder mehr hat,
eine Oberfläche des Metallformwerkstoffs, auf der die Polypropylenschicht angeordnet ist, eine Schiefe der Rauhigkeitskurve (Rsk) von -1,0 oder mehr besitzt, und
die Oberfläche des Metallformwerkstoffs, auf dem die säuremodifizierte Polypropylenschicht angeordnet ist, eine Kurtose der Rauhigkeitskurve (Rku) von weniger als 5,0 besitzt.

2. Verbundwerkstoff aufweisend:
den beschichteten Metallformwerkstoff gemäß Anspruch 1; und
ein Formteil aus einer thermoplastischen Harzzusammensetzung, das an eine Oberfläche des beschichteten Metallformwerkstoffs angefügt ist.

3. Verfahren zur Herstellung eines beschichteten Metallformwerkstoffs, umfassend:
Bereitstellen eines Metallformwerkstoffs; und
Bilden einer säuremodifizierten Polypropylenschicht aufweisend 40 Massenprozent oder mehr an säuremodifiziertem Polypropylen und mit einer Schichtstärke von 0,2 µm oder mehr durch Aufbringen eines Beschichtungsmaterials aufweisend das säuremodifizierte Polypropylen auf eine Oberfläche des Metallformwerkstoffs und Trocknen des Beschichtungsmaterials, wobei
das säuremodifizierte Polypropylen eine Schmelzviskosität im Bereich von 1.000 bis 10.000 mPa•s hat,
die Oberfläche des Metallformwerkstoffs, auf der die säuremodifizierte Polypropylenschicht gebildet werden soll, eine Schiefe der Rauhigkeitskurve (Rsk) von -1,0 oder mehr besitzt, und
die Oberfläche des Metallformwerkstoffs, auf der die säuremodifizierte Polypropylenschicht gebildet werden soll, eine Kurtose der Rauhigkeitskurve (Rku) von weniger als 5,0 besitzt.

4. Verfahren zur Herstellung eines Verbundwerkstoffs aufweisend ein Formteil aus einer thermoplastischen Harzzusammensetzung, welches an einen Metallformkörper angefügt wird; das Verfahren umfassend:
Bereitstellen des beschichteten Metallformwerkstoffs gemäß Anspruch 1; und
In-Kontakt-bringen einer erwärmten thermoplastischen Harzzusammensetzung mit einer Oberfläche des beschichteten Metallformwerkstoffs, um ein Formteil aus der thermoplastischen Harzzusammensetzung an die Oberfläche des beschichteten Metallformwerkstoffs anzufügen.

## Revendications

1. Matériau métallique façonné et revêtu, comprenant
un matériau métallique façonné ; et
une couche de polypropylène modifiée par un acide agencée sur le matériau métallique façonné, la couche de polypropylène modifiée par un acide comprenant 40 % en poids ou plus de polypropylène modifié par un acide, dans lequel
le polypropylène modifié par un acide présente une viscosité à l'état fondu de 1000 à 10 000 mPa•s,
la couche de polypropylène modifiée par un acide présente une épaisseur de film de 0,2 µm ou plus,
une surface du matériau métallique façonné, sur lequel la couche de polypropylène modifiée par un acide est agencée, présente une asymétrie de la courbe de rugosité (Rsk) de - 1,0 ou plus, et
la surface du matériau métallique façonné, sur lequel la couche de polypropylène modifiée par un acide est agencée, présente un aplatissement de la courbe de rugosité (Rku) inférieur à 5,0.

2. Composite, comprenant :
le matériau métallique façonné et revêtu selon la revendication 1 ; et
un article moulé d'une composition de résine thermoplastique relié avec une surface du matériau métallique façonné et revêtu.

3. Procédé destiné à la production d'un matériau métallique façonné et revêtu, comprenant :
la fourniture d'un matériau métallique façonné ; et
la formation d'une couche de polypropylène modifiée par un acide comprenant 40 % en poids ou plus de polypropylène modifié par un acide et présentant une épaisseur de film de 0,2 µm ou plus en appliquant un matériau de revêtement comprenant le polypropylène modifié par un acide sur une surface du matériau métallique façonné et en séchant le matériau de revêtement, dans lequel
le polypropylène modifié par un acide présente une viscosité à l'état fondu comprise dans une plage allant de 1000 à 10 000 mPa•s,
la surface du matériau métallique façonné sur lequel la couche de polypropylène modifiée par un acide doit être formée présente une asymétrie de la courbe de rugosité (Rsk) de -1,0 ou plus, et
la surface du matériau métallique façonné sur lequel la couche de polypropylène modifiée par un acide doit être formée présente un aplatissement de la courbe de rugosité (Rku) inférieur à 5,0.

4. Procédé destiné à la production d'un composite comprenant un article moulé d'une composition de résine thermoplastique relié avec un matériau métallique façonné, le procédé comprenant :
la fourniture du matériau métallique façonné et revêtu selon la revendication 1 ; et
la mise en contact d'une composition de résine thermoplastique chauffée avec une surface du matériau métallique façonné et revêtu en vue de relier un article moulé de la composition de résine thermoplastique avec la surface du matériau métallique façonné et revêtu.
